Europäisches Patentamt

European Patent Office

Office européen des brevets

(11) Numéro de publication: **0 165 833**
**B1**

## (12) FASCICULE DE BREVET EUROPÉEN

(45) Date de publication du fascicule du brevet:
**15.02.89**

(21) Numéro de dépôt: **85400881.0**

(22) Date de dépôt: **06.05.85**

(51) Int. Cl.⁴: **A 01 D 90/10,** A 01 F 29/00

(54) Dispositif de démêlage pour machines distributrices de fourrage, ensilage, paille ou autre.

(30) Priorité: **07.05.84 FR 8407064**

(43) Date de publication de la demande:
**27.12.85 Bulletin 85/52**

(45) Mention de la délivrance du brevet:
**15.02.89 Bulletin 89/7**

(84) Etats contractants désignés:
**AT BE DE GB IT NL**

(56) Documents cité:
**EP-A-0 102 406**
**EP-A-0 103 326**
**EP-A-0 155 884**
**DE-B-1 157 025**
**FR-A-1 507 637**
**FR-A-2 230 275**
**FR-A-2 262 486**
**FR-A-2 533 410**
**US-A-3 214 051**

(73) Titulaire: **JEANTIL S.A., 14 rue de la Libération,
F-35310 Mordelles (FR)**

(72) Inventeur: **Jeantil, Robert, 24 rue de Plaisance,
F-35310 Mordelles (FR)**

(74) Mandataire: **Moncheny, Michel, c/o Cabinet
Lavoix 2 Place d'Estienne d'Orves, F-75441 Paris
Cedex 09 (FR)**

LIBER, STOCKHOLM 1989

## Description

La présente invention concerne la distribution de fourrage, d'ensilage, de paille ou analogue, à partir d'une machine distributrice telle qu'une dessileuse, une remorque ou autre.

Comme décrit dans EP-A-102 406 et FR-A-2 533 410 ces machines sont habituellement munies au-dessus d'un fond mobile de transport d'un dispositif de démêlage constitué par un organe mobile tel qu'un convoyeur ou un noyau cylindrique, qui est muni de doigts radiaux espacés et entraînés en continu, dans le sens de la distribution, sur une courbe fermée et par un rateau de repartition et de retour monté oscillant au-dessus de cet organe mobile.

Or, la variété des longueurs des brins contenus dans les ensilages, fourrages, paille ou autre, pose des problèmes de fonctionnement à ces dispositifs. En effet, les brins longs tendent à s'enrouler autour de l'organe de démêlage et, par suite, à bloquer la distribution ou tout au moins à la rendre irrégulière, des apports trop importants succédant à des manques.

Il a déjà été proposé d'obvier à cet inconvénient en entourant partiellement le convoyeur à dents, - voire même deux convoyeurs à dents surperposés -, par des barres formant une cage autour de chaque convoyeur, les barres écartant progressivement les brins et les doigts se déplaçant entre ces barres (EP-A-103 326).

L'invention a aussi pour but de remédier à cet inconvénient en fournissant un dispositif de démêlage qui permette de démêler efficacement des ensilages à brins de toutes longueurs et d'assurer ainsi une distribution régulière.

Elle a donc pour objet un dispositif de démêlage de brins de fourrage, d'ensilage, de paille ou autre, selon le préambule de la revendication 1, dispositif qui comporte en outre les caractéristiques de la partie caractérisante de la revendication1.

En se déplaçant en sens inverse, les doigts en regard des deux organes mobiles contrecarrent la tendance à l'enroulement des brins longs et facilitent leur éloignement de l'organe qui les porte.

L'invention sera mieux comprise à l'aide de la description qui va suivre, de modes de réalisation donnés uniquement à titre d'exemples et représentés aux dessins annexés sur lesquels:

- la Fig. 1 est une vue en élévation de la partie avant d'une machine distributrice munie d'un dispositif de démêlage suivant l'invention,
- la Fig. 2 est une vue partielle en perspective d'un convoyeur entrant dans la construction du dispositif de démêlage de la Fig. 1.

L'exemple de réalisation représenté concerne une dessileuse distributrice 1 mais il est bien evident que l'invention s'applique à toute remorque, ou analogue, permettant la distribution de fourrage, ensilage, foin, paille ou autre. La machine 1 comporte, de la manière habituelle un fond mobile 2 se déplaçant longitudinalement pour amener l'ensilage vers sa partie avant, au droit d'un convoyeur transversal 4 le conduisant à un orifice de distribution latéral 5. Au-dessus de l'extrémité avant du fond mobile 2 est monté un dispositif de démêlage comportant un premier convoyeur de démêlage 6 disposé de façon inclinée vers le haut à partir du fond mobile 2. Au-dessus du premier convoyeur 6 est disposé parallèlement un second convoyeur 7 identique. Les deux convoyeurs 6 et 7 sont entraînés dans le meme sens à partir d'un système moteur commun au fond mobile 2 et au convoyeur 4, par exemple à partir de la prise de force d'un tracteur d'entraînement, par l'intermédiaire d'un système de renvoi d'angle 8 et de chaînes 9 et 10.

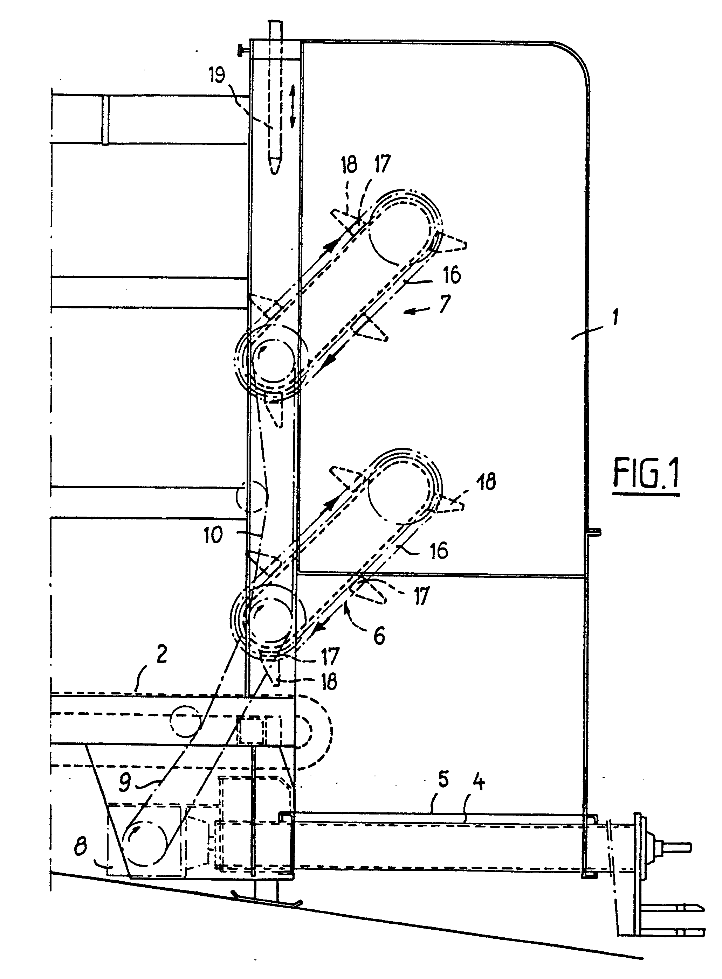

Le sens de déplacement des convoyeurs 6 et 7 est représenté par les flèches de la Fig. 1, qui montrent que le brin supérieur de chacun d'eux est entraîné vers le haut et vers l'extérieur en direction du convoyeur transversal de sortie 4.

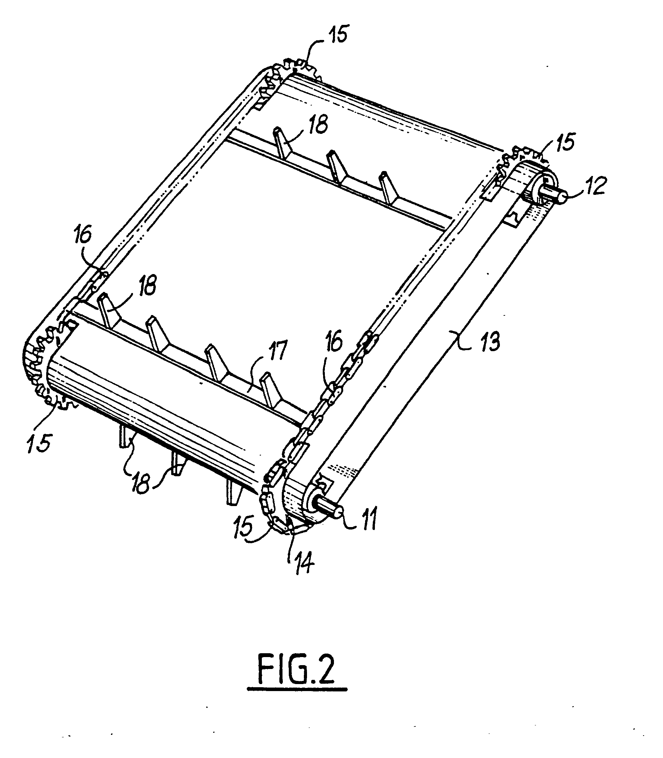

Comme représenté à la Fig. 2, chaque convoyeur comporte des arbres 11, 12 montés à rotation dans un carter en tôle 13 qui présente, au niveau des extrémités des arbres 11 et 12, des fentes 14 pour le passage de pignons 15 sur lesquels passent des chaînes de liaison 16. Sur les chaînes 16 sont montées à intervalle régulier des barrettes transversales 17 munies de doigts 18 régulièrement répartis sur la largeur de chaque barrette, mais décalées transversalement d'une barrette à l'autre.

Ainsi qu'on peut le voir à la Fig. 2, les barrettes 17 ont avantageusement en section transversale la forme de tubes à section rectangulaire.

Le périmètre de chacun des convoyeurs 6, 7 est calculé de manière à avoir une dimension supérieure à la longueur maximale des brins d'ensilage devant être traités par la machine.

Le convoyeur inférieur 6 est disposé par rapport au fond mouvant 2 de telle manière que ses barrettes 17 qui sont les plus proches dudit fond passent suffisamment près de celui-ci pour limiter le débit de l'ensilage.

Au-dessus du convoyeur supérieur 7 le dispositif de démêlage comporte des barres 19 à position réglable en hauteur destinées à freiner et a démêler l'ensilage entraîné par les doigts 18 du convoyeur 7 qui passent devant les barres 19. Ces barres sont donc utilisées comme peigne réglable.

Compte tenu du sens de déplacement des deux convoyeurs on constate que le tronçon supérieur du convoyeur inférieur 6 et le tronçon inférieur du convoyeur supérieur 7 se déplacent en sens contraire de sorte que les doigts 18 de ces deux tronçons assurent un effet de cardage de l'ensilage se trouvant entre les deux convoyeurs.

Le fait que le périmètre des convoyeurs 6 et 7 soit supérieur à la longueur maximale des brins des ensilages à traiter permet en outre aux brins longs de se libérer facilement du dispositif de démêlage constitué par les deux convoyeurs 6 et 7. La tendance à l'enroulement autour des convoyeurs ne peut donc se produire. Les effets de cardage, de freinage et de filtrage évoqués ci-dessus répondent parfaitement aux conditions nécessaires à un démêlage approprié et à une bonne régularité dans la distribution, que les matières à traiter soient à brins courts ou à brins longs.

Bien que dans le présent exemple, on ait représenté une machine comportant deux convoyeurs superposés, il est possible d'envisager la réalisation d'une telle machine présentant un nombre de convoyeurs plus important.

Par ailleurs, il est également possible d'envisager pour les convoyeurs 6 et 7 l'emploi d'éléments de transmission sans fin autres que des chaînes.

Ces éléments peuvent être par exemple constitués par des courroies sur lesquelles seraient fixées les barrettes transversales portant les doigts d'entraînement.

## Revendications

1. Dispositif de démêlage de brins de fourrage, d'ensilage, de paille ou autre, comportant au-dessus de l'extrémité d'un fond mobile d'alimentation (2), un convoyeur (6) comportant deux arbres rotatifs (11 et 12) et muni de doigts en saillie (18) d'entraînement des brins, espacés et déplacés en continu sur une courbe fermée autour des deux arbres (11 et 12), caractérisé en ce qu'il comporte au-dessus du premier convoyeur (6) au moins un deuxième convoyeur (7) semblable au premier, entraîné dans le même sens, et pourvu comme lui de doigts (18) d'entraînement des brins, les convoyeurs (6, 7) ayant un périmètre de longueur supérieure à la longueur maximale des brins à traiter et ayant des tronçons en regard qui sont parallèles et qui attaquent les brins de fourrage ou d'ensilage en sens inverse en assurant un effet de cardage du fourrage ou de l'ensilage se trouvant entre eux.

2. Dispositif de démêlage suivant la revendication 1, caractérisé en ce que les convoyeurs (6, 7) sont disposés obliquement vers le haut dans le sens du déplacement des éléments d'entraînement sans fin (16).

3. Dispositif de démêlage suivant l'une des revendications 1 et 2, caractérisé en ce que les éléments d'entraînement sans fin des convoyeurs (6, 7) sont constitués par des chaînes (16) portant des barrettes transversales (17) sur lesquelles les doigts (18) d'entraînement des brins sont disposés à intervalles réguliers.

4. Dispositif suivant la revendication 3, caractérisé en ce que les doigts (18) d'entraînement des brins d'une barrette transversale (17) sont décalés transversalement par rapport aux doigts d'entraînement des brins de la barrette transversale suivante.

5. Dispositif suivant l'une des revendications 1 à 4 caractérisé en ce qu'il comporte des barrettes (19) réglables en hauteur disposées au-dessus du convoyeur supérieur (7) et destinées à freiner et à démêler l'ensilage entraîné par les doigts (18) du convoyeur supérieur (7).

6. Dispositif suivant l'une des revendications 3 à 5, caractérisé en ce que chaque convoyeur (6, 7) comporte un carter en tôle (13) dans lequel sont montés à rotation des arbres (11, 12) portant des pignons dentés (15) reliés par les chaînes (16) qui portent les barrettes transversales (17), les pignons dentés (15) passant par des fentes (14) ménagées dans ledit carter.

7. Dispositif suivant l'une des revendications précédentes, caractérisé en ce qu'il comporte plusieurs convoyeurs analogues (6, 7), superposés et entraînés dans le même sens.

## Patentansprüche

1. Vorrichtung zur Entwirrung von Halmen von Viehfutter, Siloeinlagerungen, Stroh etc., die oberhalb des Endes eines mobilen Zuführbodens (2) einen Förderer (6) aufweist, der zwei Drehachsen (11 und 12) aufweist und mit vorspringenden Mitnahmefingern (18) für die Halme oder Stiele versehen ist, die räumlich getrennt sind und kontinuierlich auf einer um die beiden Achsen (11 und 12) geschlossenen Kurve bewegt werden, dadurch gekennzeichnet, daß sie über dem ersten Förderer (6) wenigstens einen zweiten zu dem ersten ähnlichen Förderer (7) aufweist, der in derselben Richtung angetrieben und wie jener mit Mitnahmefingern (18) für die Halme versehen ist, wobei die Förderer (6, 7) einen Längsumfang, der größer ist als die maximale Länge der zu behandelnden Halme, und gegenüberliegende Endstücke aufweisen, die parallel sind und die Viehfutter- oder Siloeinlagerungshalme in umgekehrter Richtung angreifen, wobei sie einen Kardierungseffekt des Viehfutters oder der Siloeinlagerung, der sich zwischen ihnen einstellt, sicherstellen.

2. Entwirrungsvorrichtung nach Anspruch 1, dadurch gekennzeichnet, daß die Förderer (6, 7) schräg nach oben in Richtung der Bewegung der Endlosmitnahmeelemente (16) angeordnet sind.

3. Entwirrungsvorrichtung nach einem der Ansprüche 1 oder 2, dadurch gekennzeichnet, daß die endlosen Mitnahmeelemente der Förderer (6, 7) durch Ketten (16) gebildet sind, die Querstege (17) aufweisen, auf denen die Mitnahmefinger (18) der Halme in regelmäßigen Abständen angeordnet sind.

4. Entwirrungsvorrichtung nach Anspruch 3, dadurch gekennzeichnet, daß die Mitnahmefinger (18) der Halme eines Querstegs (17) bezüglich der Mitnahmefinger der Halme des nachfolgenden Querstegs quer angeordnet sind.

5. Entwirrungsvorrichtung nach einem der Ansprüche 1 bis 4, dadurch gekennzeichnet, daß sie in der Höhe einstellbare Stege (19) aufweist, die oberhalb des oberen Förderers (7) angeordnet und dazu bestimmt sind, die Siloeinlagerung, die von den Fingern (18) des oberen Förderers (7) mitgenommen wird, abzufangen und zu entwirren.

6. Vorrichtung nach einem der Ansprüche 3 bis 5, dadurch gekennzeichnet, daß jeder Förderer (6, 7) einen Kasten (13) aus Blech aufweist, in dem Achsen (11, 12) zur Drehung angeordnet sind, die Zahnritzel (15) aufweisen, die durch die Ketten (16) miteinander verbunden sind, die die Querstege (17) tragen, wobei die Zahnritzel (15) durch Schlitze (14) hindurchtreten, die in dem Kasten ausgebildet sind.

7. Vorrichtung nach einem der vorhergehenden Ansprüche, dadurch gekennzeichnet, daß sie mehrere ähnliche Förderer (6, 7) aufweist, die übereinander angeordnet sind und in dieselbe Richtung bewegt werden.

**Claims**

1. Device for disentangling stalks of fodder, of silage, of straw or the like, comprising, above the end of a movable feed base (2), a conveyor (6) having two rotary shafts (11 and 12) and equipped with projecting stalk-driving fingers (18) spaced and moved continuously over a closed curve round the two shafts (11 and 12), characterized in that it possesses, above the first conveyor (6), at least one second conveyor (7) similar to the first, driven in the same direction and, like it, equipped with stalk-driving fingers (18), the conveyors (6, 7) having a perimeter of a length greater than the maximum length of the stalks to be processed and having mutually confronting portions which are parallel and which engage the stalks of fodder or of silage in opposite directions, thus exerting a carding effect on the fodder or the silage located between them.

2. Disentangling device according to Claim 1, characterized in that the conveyors (6, 7) are arranged obliquely upwards in the direction of movement of the endless driving elements (16).

3. Disentangling device according to one of Claims 1 and 2, characterized in that the endless driving elements of the conveyors (6, 7) consist of chains (16) carrying transverse bars (17), on which the stalk-driving fingers (18) are arranged at regular intervals.

4. Device according to Claim 3, characterized in that the stalk-driving fingers (18) of one transverse bar (17) are offset transversely relative to the stalk-driving fingers of the following transverse bar.

5. Device according to one of Claims 1 to 4, characterized in that it possesses bars (19) of adjustable height arranged above the upper conveyor (7) and intended for braking and disentangling the silage driven by the fingers (18) of the upper conveyor (7).

6. Device according to one of Claims 3 to 5, characterized in that each conveyor (6, 7) has a sheet-metal housing (13), in which are mounted rotatably shafts (11, 12) carrying toothed pinions (15) connected by means of the chains (16) carrying the transverse bars (17), the toothed pinions (15) passing through slots (14) made in the said housing.

7. Device according to one of the preceding claims, characterized in that it comprises several similar conveyors (6, 7) superposed and driven in the same direction.

FIG.1

FIG.2